Europäisches Patentamt

European Patent Office

Office européen des brevets

(11) Veröffentlichungsnummer: **0 270 875**
**A1**

(12) **EUROPÄISCHE PATENTANMELDUNG**

(21) Anmeldenummer: 87116825.8

(22) Anmeldetag: 14.11.87

(51) Int. Cl.⁴: **C09D 5/44** , C08G 59/56

(30) Priorität: 20.11.86 DE 3639638

(43) Veröffentlichungstag der Anmeldung:
15.06.88 Patentblatt 88/24

(84) Benannte Vertragsstaaten:
**ES**

(71) Anmelder: **BASF Lacke + Farben
Aktiengesellschaft
Max-Winkelmann-Strasse 80
D-4400 Münster(DE)**

(72) Erfinder: **Geist, Michael, Dr.
Rubensstrasse 251
D-4400 Münster(DE)**
Erfinder: **Cibura, Klaus, Dr.
25680 W. Twelve Mile Road Appartment 302
Southfield Michigan 48086(US)**
Erfinder: **Fobbe, Helmut, Dr.
Liebigweg 5
D-4400 Münster(DE)**
Erfinder: **Ott, Günther, Dr.
Von-Holte-Strasse 101 a
D-4400 Münster(DE)**
Erfinder: **Ahlers, Klaas, Dr.
Föhrenweg 21
D-4400 Münster(DE)**

(54) **Kathodisch abscheidbare wasserverdünnbare Überzugszusammensetzungen und Verfahren zur Herstellung von kathodisch abscheidbaren wasserverdünnbaren Bindemitteln.**

(57) Die Erfindung betrifft kathodisch abscheidbare wasserverdünnbare Bindemittel, die durch Umsetzung von ggf. modifizierten Epoxidharzen, deren Epoxidfunktionalität größer als 1 ist und deren Epoxidäquivalentgewicht unter 1000 liegt, Polyphenolen und Aminen und anschließender Neutralisation der erhaltenen Reaktionsprodukte mit einer Säure erhalten worden sind. Die Bindemittel zeichnen sich dadurch aus, daß sie hergestellt worden sind, indem zunächst ein Gemisch aus mindestens einem Polyphenol und mindestens einem Amin hergestellt worden ist, das dann mit dem ggf. modifizierten Epoxidharz umgesetzt worden ist und das so erhaltene Reaktionsprodukt anschließend mit einer Säure neutralisiert worden ist.

EP 0 270 875 A1

PAT 86 097
04.11.1986

BASF Lacke + Farben Aktiengesellschaft, Münster

Kathodisch abscheidbare wasserverdünnbare Bindemittel,
wasserverdünnbare Überzugszusammensetzungen und Verfahren
zur Herstellung von kathodisch abscheidbaren wasserverdünnbaren Bindemitteln

Die Erfindung betrifft kathodisch abscheidbare wasserverdünnbare Bindemittel, die durch Umsetzung von ggf. modifizierten
Epoxidharzen, deren Epoxidfunktionalität größer als 1
ist und deren Epoxidäquivalentgewicht unter 1000 liegt,
Polyphenolen und Aminen und anschließender Neutralisation
der erhaltenen Reaktionsprodukte mit einer Säure erhalten
worden sind.

Kathodisch abscheidbare wasserverdünnbare Bindemittel
werden zur Herstellung von Elektrotauchlacken für die
kationische Elektrotauchlackierung benötigt. Die kationische
Elektrotauchlackierung ist ein vor allem zum Grundieren
häufig angewandtes Lackierverfahren, bei dem wasserverdünnbare kationische Gruppen tragende Kunstharze mit Hilfe von
Gleichstrom auf elektrisch leitende Körper aufgebracht
werden.

Die Synthese der oben genannten Bindemittel wurde bisher
so durchgeführt, daß zunächst einmal das ggf. modifizierte
Epoxidharz mit dem Polyphenol zu einem epoxidgruppenhaltigen
Zwischenprodukt kettenverlängert wurde und an die verbleibenden Epoxidgruppen anschließend das Amin addiert wurde.
Diese Reaktionsfolge kann auch umgekehrt werden, d.h.
zuerst wird ein Teil der Epoxidgruppen des ggf. modifizierten Epoxidharzes mit einem Amin umgesetzt und anschließend
mit einem Polyphenol kettenverlängert. In jedem Fall wird

0 270 875

2

die Umsetzung mit der Polyphenol- und der Aminkomponente in aufeinanderfolgenden, separaten Reaktionsschritten durchgeführt. Das erhaltene Reaktionsprodukt liegt nach Neutralisation mit einer Säure in wasserverdünnbarer Form vor.

Die auf diese Art und Weise hergestellten Bindemittel haben den Nachteil, daß sie in vielen Fällen schlecht wasserdispergierbar sind und zur Herstellung von Pigmentpasten nicht geeignet sind.

Pigmentpasten werden zur Inkorporation von Pigmenten und Füllmaterialien in Elektrotauchlacke benötigt. Diese Pigmentpasten können nur mit Harzen, die besonders gute Dispergier- und Pigmentbenetzungseigenschaften zeigen, hergestellt werden.

Der vorliegenden Erfindung liegt die Aufgabe zugrunde, aus ggf. modifizierten Epoxidharzen, deren Epoxidfunktionalität größer als 1 ist und deren Epoxidäquivalentgewicht unter 1000 liegt, Polyphenolen und Aminen hergestellte, verbesserte - insbesondere zur Herstellung von Pigmentpasten geeignete - kathodisch abscheidbare wasserverdünnbare Bindemittel bereitzustellen.

Diese Aufgabe wird durch kathodisch abscheidbare wasserverdünnbare Bindemittel gelöst, die hergestellt worden sind, indem zunächst ein Gemisch aus mindestens einem Polyphenol und mindestens einem Amin hergestellt worden ist, das dann mit dem ggf. modifizierten Epoxidharz umgesetzt worden ist und das so erhaltene Reaktionsprodukt anschließend mit einer Säure neutralisiert worden ist.

Als Polyphenole können prinzipiell alle Polyphenole eingesetzt werden, die sich auch für die Herstellung der in den Oberbegriffen der unabhängigen Ansprüche beschriebenen Bindemittel eignen.

Insbesondere Diphenole, wie z.B. Hydrochinon oder die leicht zugänglichen Umsetzungsprodukte aus Phenol und Aldehyden bzw. Ketonen wie Formaldehyd, Heptanal oder Aceton, sind als Polyphenolkomponenten einsetzbar. Es können auch Diphenole der allgemeinen Strukturformel HO-Ar-X-Ar-OH (Ar = Phenylenrest, X = -CO- oder $-SO_2-$) verwendet werden.

Als Polyphenol wird ganz besonders bevorzugt Bisphenol A eingesetzt.

Als Aminkomponenten können prinzipiell alle Amine eingesetzt werden, die sich auch für die Herstellung der in den Oberbegriffen der unabhängigen Ansprüche beschriebenen Bindemittel eignen.

Als Aminkomponenten werden primäre und/oder sekundäre und/oder tertiäre Amine, besonders bevorzugt sekundäre und/oder tertiäre Amine, eingesetzt. Bei der Verwendung von primären Aminen ist besonders darauf zu achten, daß keine schwer bzw. unlöslichen Reaktionsprodukte erhalten werden.

Das Amin sollte vorzugsweise eine in Wasser lösliche Verbindung sein.

Wenn primäre Amine eingesetzt werden sollen, dann werden vorzugsweise Alkylamine wie z.B. Methyl-, Ethyl-, Propyl- und Butylamin verwendet.

Wenn sekundäre Amine eingesetzt werden sollen, dann werden bevorzugt Dialkylamine wie z.B. Dimethylamin, Di-n-Butylamin, Dioctylamin, Dikokosamin, Diethylamin, Dipropylamin und Methylbutylamin verwendet. Besonders bevorzugt werden sekundäre Amine, insbesondere Dialkylamine, die mindestens eine OH-Gruppe im Molekül enthalten, eingesetzt. Als Beispiele seien Methylethanolamin und Diethanolamin genannt.

Es können auch Dialkylaminoalkylamine wie z.B. Dimethylamino-ethylamin, Diethylaminopropylamin und Dimethylaminopropyl-amin als Aminkomponenten verwendet werden.

Wenn tertiäre Amine eingesetzt werden sollen, dann werden bevorzugt Trialkylamine wie z.B. Triethylamin, Tri-n-Pentylamin, N,N-Dimethyl-2-Ethylhexylamin und N,N-Dimethylkokosamin verwendet. Besonders bevorzugt werden tertiäre Amine, insbesondere Trialkylamine, die mindestens eine OH-Gruppe im Molekül enthalten, eingesetzt. Als Beispiele seien Dimethylethanolamin, 4-Dimethylamino-1-Butanol und Dimethylneopentanolamin genannt.

Als Epoxidharze können prinzipiell alle Epoxidharze eingesetzt werden, deren Epoxidfunktionalität größer als 1 ist und deren Epoxidäquivalentgewicht unter 1000 liegt und die sich für die Herstellung der in den Oberbegriffen der unabhängigen Ansprüche beschriebenen Bindemittel eignen. Als Beispiele seien ggf. modifizierte Polyglycidylether von Polyphenolen und ggf. modifizierte Polyglycidylester genannt.

Bevorzugt werden aus Polyphenolen, vorzugsweise Bisphenol A, und Epihalohydrinen hergestellte, ggf. modifizierte Polyglycidylether als Epoxidharze eingesetzt.

Wenn aus Polyphenolen, vorzugsweise Bisphenol A, und Epihalohydrinen hergestellte Polyglycidylether, die mit Polyether-oder Polyesterdiolen kettenverlängert bzw. modifiziert worden sind (vgl. z.B. DE-OS-2701002) als Epoxidharze verwendet werden, dann werden wasserverdünnbare Bindemittel erhalten, die ganz besonders gute Eigenschaften zeigen.

Ebenfalls besonders bevorzugt eingesetzte Epoxidharze sind mit Monophenolen modifizierte Bisphenol-A-Diglycidyl-ether (vgl. Deutsche Patentanmeldungen mit den Aktenzeichen P 35 18 770.0 und P 35 18 732.8).

Die Vorteile der erfindungsgemäßen Bindemittel liegen vor allem darin, daß sie ein gutes Dispergierverhalten zeigen und sehr gut als Reibharze zur Herstellung von Pigmentpasten eingesetzt werden können.

Die Erfindung betrifft auch ein Verfahren zur Herstellung von kathodisch abscheidbaren wasserverdünnbaren Bindemitteln, bei dem ggf. modifizierte Epoxidharze, deren Epoxidfunktionalität größer als 1 ist und deren Epoxidäquivalentgewicht unter 1000 liegt, Polyphenole und Amine umgesetzt werden und die so erhaltenen Reaktionsprodukte anschließend mit einer Säure neutralisiert werden, das dadurch gekennzeichnet ist, daß zunächst ein Gemisch aus mindestens einem Polyphenol und mindestens einem Amin hergestellt wird, das dann mit dem ggf. modifizierten Epoxidharz umgesetzt wird und das so erhaltene Reaktionsprodukt anschließend mit einer Säure neutralisiert wird.

Das Gemisch aus Polyphenol und Amin wird vorzugsweise in einem geeigneten, ggf. erwärmten Lösungsmittel bereitgestellt und anschließend unter Reaktionsbedingungen, die für die hier in Rede stehende Bindemittelklasse üblich sind, mit dem Epoxidharz umgesetzt. Nach Abschluß der Umsetzung kann das Reaktionsprodukt ggf. weiteren allgemein bekannten Modifizierungsreaktionen unterworfen werden. Schließlich wird das erhaltene Bindemittel unter Zugabe von wasserlöslichen Säuren (z.B. Ameisensäure, Milchsäure, Propionsäure ...) in Wasser dispergiert und nach gut bekannten Methoden zu einem wäßrigen Elektrotauchlack weiterverarbeitet.

Die Erfindung betrifft auch wasserverdünnbare Überzugszusammensetzungen zur Herstellung von vorzugsweise kathodisch abgeschiedenen hitzehärtbaren Überzügen, deren Bindemittel zumindest zum Teil aus Bindemitteln bestehen, die durch Umsetzung von ggf. modifizierten Epoxidharzen, deren Epoxidfunktionalität größer als 1 ist und deren Epoxidäquivalentgewicht unter 1000 liegt, Polyphenolen und Aminen und anschließender Neutralisation der erhaltenen Reaktionsprodukte mit einer Säure erhalten worden sind. Die Überzugszusammensetzungen sind dadurch gekennzeichnet, daß die in Rede stehenden Bindemittel hergestellt worden sind, indem zunächst ein Gemisch aus mindestens einem Polyphenol und mindestens einem Amin hergestellt worden ist, das dann mit dem ggf. modifizierten Epoxidharz umgesetzt worden ist und das so erhaltene Reaktionsprodukt anschließend mit einer Säure neutralisiert worden ist.

Die erfindungsgemäßen Überzugszusammensetzungen können neben dem erfindungsgemäßen Bindemittel noch weitere Bindemittel und übliche Zusätze, wie z.B. Vernetzer, koaleszierende Lösemittel, Pigmente, oberflächenaktive Mittel, Vernetzungskatalysatoren, Antioxidantien, Füllstoffe, Antischaummittel usw. enthalten.

Die mit Hilfe der erfindungsgemäßen Bindemittel zubereiteten wasserverdünnbaren Überzugszusammensetzungen sind insbesondere für das kationische Elektrotauchlackierverfahren geeignet; sie können aber auch in konventiollen Beschichtungsverfahren eingesetzt werden. Als Beschichtungssubstrate können z.B. ggf. vorbehandelte Metalle, wie Eisen, Stahl, Kupfer, Zink, Messing, Magnesium, Zinn, Nickel, Chrom und Aluminium, aber auch imprägniertes Papier und andere elektrisch leitende Substrate benutzt werden.

Die Erfindung wird in den folgenden Beispielen näher erläutert. Alle Angaben über Teile und Prozentsätze sind Gewichtsangaben, falls nicht ausdrücklich etwas anderes festgestellt wird.

### Herstellung eines erfindungsgemäßen Harzes (I)

In einer geeigneten Reaktionsapparatur werden unter Inertgas 652,6 Teile Bisphenol A und 102,0 Teile N-Methylethanolamin in Gegenwart von 83,8 Teilen Xylol und 1316,0 Teilen Ethylenglykolmonobutylether bei 90°C gelöst. Sobald die Mischung klar ist, werden bei dieser Temperatur 1345,3 Teile eines Epoxidharzes auf Basis Bisphenol A mit einem Epoxidäquivalentgewicht von 188 in kleinen Portionen unter Rühren so zugegeben, daß die Temperatur 100°C nicht übersteigt. Nach Beendigung der Zugabe, die in diesem Fall 1 Stunde dauert, wird noch eine weitere Stunde bei 90°C nachgerührt, bevor das Reaktionsgut gekühlt und ausgetragen wird. Man erhält 3500 Teile einer klaren Harzlösung mit einem Feststoffgehalt von 60 Gew.-% und einem Basengehalt von 0,64 Milliäquivalenten/Gramm Festharz. Die Viskosität beträgt 6,0 dPa s, gemessen nach Verdünnen mit Tetrahydrofuran auf 35 Gew.-% Festgehalt bei 23°C.

Herstellung eines erfindungsgemäßen Harzes (II)

Das Beispiel beschreibt die Synthese eines erfindungsgemäßen Harzes unter Verwendung eines mit einer Monophenolverbindung modifizierten Epoxidharzes (vgl. Deutsche Patentanmeldung P 35 18 732.8).

2265,0 Teile eines Epoxidharzes mit einem Epoxidäquivalentgewicht von 188 werden mit 134,6 Teilen Xylol und 394,6 Teilen Dodecylphenol vermischt und in einer Stickstoffatmosphäre unter Rühren auf 122°C erhitzt. Anschließend werden 5,3 Teile N,N-Dimethylbenzylamin zugegeben, wodurch eine leicht exotherme Wärmetönung eintritt. Sodann wird die Temperatur auf 130°C angehoben und dort gehalten, bis das Epoxidäquivalentgewicht des Reaktionsgemisches den Wert 293 (bezogen auf Festanteile) erreicht hat (das ist in ca. 2 Stunden der Fall). Die so erhaltene Lösung des modifizierten Epoxidharzes wird anschließend auf 70°C gekühlt, bevor sie - wie nachfolgend beschrieben - weiterverarbeitet wird.

Währenddessen wird in einem zweiten Reaktionsgefäß eine Mischung aus 406,2 Teilen Bisphenol A, 120,4 Teilen N-Methylethanolamin und 1317,2 Teilen Ethylenglykolmonobutylether zubereitet und auf 70°C erwärmt, bis eine klare Lösung

8

entstanden ist. Diese Lösung wird auf 70°C temperiert bereitgehalten. Sodann werden 1656,1 Teile der zuvor beschriebenen Epoxidharzlösung in kleinen Portionen unter Rühren so eingetragen, daß die Temperatur nicht über 75°C steigt. Die Zugabe dauert 30 Minuten. Anschließend wird noch 1 Stunde bei 80°C nachgerührt und schließlich nach kurzem Kühlen ausgetragen. Es wird eine klare, bernsteinfarbene Harzlösung mit folgenden Kennzahlen erhalten:

Festkörper (gemessen nach 1 Stunde Trockenzeit bei 130°C): 60,6 Gew.-%

Basengehalt des Festharzes: 0,77 meq/g

Viskosität: 9,4 dPa s (gemessen nach Verdünnen mit Ethylenglykolmonobutylether auf 35 Gew.-% Festgehalt bei 23°C)

Herstellung eines Harzes nach dem Stand der Technik (Harz III)

Die Ausgangsstoffe entsprechen in Art und Menge denen, die zur Herstellung des erfindungsgemäßen Harzes (I) verwendet werden. Das Bisphenol A und das Amin werden jedoch stufenweise mit dem Epoxidharz umgesetzt.

652,6 Teile Bisphenol A, 1345,3 Teile eines Epoxidharzes mit einem Epoxidäquivalentgewicht von 188, 83,8 Teile Xylol und 415,0 Teile Ethylenglykokmonobutylether werden in einem Reaktor vorgelegt und unter Stickstoffatmosphäre auf 130°C erwärmt. Nachdem die Mischung 90°C erreicht hat, werden unter Rühren 4,0 Teile Triphenylphosphin zugegeben. Durch die exotherme Reaktion steigt die Temperatur kurzzeitig auf 140°C. Nach Abklingen der Wärmeentwicklung wird die Temperatur bei 130°C gehalten bis die Mischung ein Epoxidäquivalentgewicht von 1400 (bezogen auf Festanteile) erreicht hat. Dann wird auf 100°C gekühlt. Unter weiterem Kühlen werden 102,1 Teile N-Methylethanolamin zugegeben. Nach Abklingen der Reaktion wird die Mischung noch 1 Stunde bei 110°C gehalten, bevor unter Kühlung mit 903,2 Teilen Ethylenglykolmonobutylether verdünnt wird. Die resultierende

9

klare Harzlösung besitzt folgende Kennzahlen:

Festkörper: 61,2 Gew.-% (gemessen nach 1 Stunde Trocknung bei 130°C)

Basengehalt: 0,65 meq/g Festharz

Viskosität: 4,2 dPa s (gemessen nach Verdünnen mit Propylenglykolmonomethylether auf 40 Gew.-% Festgehalt bei 23°C)

Herstellung von Pigmentpasten

Die Pigmentpasten werden aus den in der nachfolgenden Tabelle aufgeführten Gewichtsanteilen der Einzelkomponenten zubereitet. Hierzu wird das Harz zusammen mit der ersten Portion entionisiertem Wasser (Wasser-1), Eisessig, Pigmenten und Füllstoffen vermengt und mit einem Schnellrührer vorgemischt. Diese Mischung wird anschließend in einem Mahlaggregat auf eine Hegmann-Feinheit von 6-9 zerkleinert. Danach gibt man eine zweite Portion entionisiertes Wasser (Wasser-2) zu, um die gewünschte Pastenkonsistenz zu erreichen.

### Zusammensetzung der Pigmentpasten

|  | Pigment-paste I | Pigment-paste II | Pigment-paste III |
|---|---|---|---|
| Harz (I) | 400,0 | – | – |
| Harz (II) | – | 363,0 | – |
| Harz (III) | – | – | 400,0 |
| Wasser-1 | 397,2 | 357,3 | 392,4 |
| Eisessig | 8,6 | 10,2 | 8,8 |
| Titandioxid | 447,3 | 410,1 | 447,3 |
| Extender auf Basis Aluminiumsilikat | 109,4 | 100,3 | 109,4 |
| Bleisilikat | 26,4 | 24,2 | 26,4 |
| Ruß | 6,9 | 6,4 | 6,9 |
| Wasser-2 | 127,2 | 115,8 | 127,2 |
| Festgehalt | 55 Gew.-% | 55 Gew.-% | 55 Gew.-% |

Während die Pigmentpasten (I) und (II) eine gute Lagerstabilität aufweisen, scheidet die Pigmentpaste (III) nach 4 Wochen Lagerung einen festen Bodensatz ab, der nur schwer wieder aufrührbar ist.

## Herstellung von erfindungsgemäßen Überzugszusammensetzungen

### Darstellung eines Vernetzers

Gemäß der DE-OS-2701002, Beispiel 1, wird ein geblockter Isocyanatvernetzer hergestellt, indem 218 Teile 2-Ethylhexanol langsam zu 291 Teilen einer 80/20 Isomermischung von 2,4-/2,6-Toluylendiisocyanat in einer Stickstoffatmosphäre unter Rühren zugegeben werden, wobei die Reaktionstemperatur durch äußere Kühlung unter 38°C gehalten wird. Der Ansatz wird noch eine weitere halbe Stunde bei 38°C gehalten und dann auf 60°C erwärmt, wonach 75 Teile Trimethylolpropan und anschließend 0,08 Teile Dibutylzinndilaurat als Katalysator zugegeben werden. Nach einer exothermen Reaktion zu Beginn wird der Ansatz 1,5 Stunden bei 121°C gehalten, bis im wesentlichen die gesamten Isocyanatgruppen verbraucht sind, was an dem Infrarotspektrum zu erkennen ist. Der Ansatz wird dann mit 241 Teilen Ethylenglykolmonoethylether verdünnt.

### Herstellung einer wäßrigen Bindemitteldispersion gemäß EP-A-154724:

Ein Reaktor, der mit einer Heizeinrichtung, einem Rührer, einem Kühler, einem Thermometer und einem Stickstoffeinlaß ausgerüstet ist, wird mit 1053 Teilen eines Bisphenol A-Epoxidharzes mit einem Epoxidäquivalentgewicht von 188, 205 Teilen Hexylglykol, 20 Teilen Xylol und 5 Teilen Dimethylbenzylamin beschickt. Die Temperatur wird auf 131°C angehoben und die Reaktion durchgeführt, bis ein Epoxidäquivalentgewicht von 440 erreicht ist. Danach werden 376 Teile eines handelsüblichen Polycaprolaktondiols mit einem Molekulargewicht von 535 und weitere 2 Teile Dimethylbenzyl-

amin zugefügt. Die Reaktion wird bei 131°C weitergeführt, bis das Reaktionsgemisch ein Epoxidäquivalentgewicht von 1100 aufweist. Danach werden 1260 Teile des zuvor beschriebenen Vernetzungsmittels zugesetzt. Durch externe Kühlung wird die Reaktionstemperatur auf 90°C gesenkt. Das Reaktionsgemisch wird nun mit 110 Teilen eines Umsetzungsproduktes aus 1 Mol Diethylentriamin und 2 Mol Methylisobutylketon (70%ig in Methylisobutylketon) und 83 Teilen N-Methylethanolamin versetzt, wobei die Temperatur exotherm auf 115°C ansteigt. Die Temperatur wird anschließend noch 1 Stunde bei 110°C gehalten. Danach wird der Reaktionsansatz mit 134 Teilen Propylenglykolphenylether verdünnt und auf 95°C abgekühlt und ausgetragen. Es resultiert eine klare Harzlösung.

Inzwischen wird ein Dispergierbad aus 1472 Teilen entionisiertem Wasser, 23 Teilen Eisessig und 1 Teil eines handelsüblichen Entschäumers vorbereitet, in das 1800 Teile der zuvor beschriebenen Harzlösung unter Rühren eingetragen werden. Man läßt das Dispergiergemisch noch 2 Stunden rühren, bevor mit weiteren 942 Teilen entionisiertem Wasser verdünnt wird. Es resultiert eine niederviskose Dispersion mit einem Feststoffgehalt von 35 Gew.-%.

Jeweils 2000 Gewichtsteile der oben beschriebenen Bindemitteldispersion werden mit 680 Gewichtsteilen der oben beschriebenen Pigmentpasten vermischt. Der Badfestkörper wird mit entionisiertem Wasser auf 20 Gew.-% (150°C, 30 Minuten) eingestellt. Man läßt dann das Bad 3 Tage unter Rühren altern. Die Abscheidung der Lackfilme erfolgt während 2 Minuten auf zinkphosphatiertem Blech. Die Badtemperatur beträgt hierbei 27°C. Die abgeschiedenen Filme werden bei 180°C während 20 Minuten eingebrannt.

Ergebnis der Abscheidungen

| Bad | I | II |
|---|---|---|
| Pigmentpaste | I | II |
| Schichtdicke (/um) bei Spannung (V) | 28/300 | 24/300 |
| Umgriff (cm) bei Spannung (V) | 19,5/320 | 21/350 |
| Verlauf* | 1,5 | 1,0 |
| Kraterbewertung* | 1,5 | 0,5 |
| Erichsentiefung (mm) | 6,5 | 8,0 |
| Gitterschnitt* | 0 | 0 |

* 0 = bester Wert, 5 = schlechtester Wert

0 270 875

Patentansprüche

1. Kathodisch abscheidbare wasserverdünnbare Bindemittel, die durch Umsetzung von ggf. modifizierten Epoxidharzen, deren Epoxidfunktionalität größer als 1 ist und deren Epoxidäquivalentgewicht unter 1000 liegt, Polyphenolen und Aminen und anschließender Neutralisation der erhaltenen Reaktionsprodukte mit einer Säure erhalten worden sind, dadurch gekennzeichnet, daß die Bindemittel hergestellt worden sind, indem zunächst ein Gemisch aus mindestens einem Polyphenol und mindestens einem Amin hergestellt worden ist, das dann mit dem ggf. modifizierten Epoxidharz umgesetzt worden ist und das so erhaltene Reaktionsprodukt anschließend mit einer Säure neutralisiert worden ist.

2. Wasserverdünnbare Überzugszusammensetzungen zur Herstellung von vorzugsweise kathodisch abgeschiedenen hitzehärtbaren Überzügen, deren Bindemittel zumindest zum Teil aus Bindemitteln bestehen, die durch Umsetzung von ggf. modifizierten Epoxidharzen, deren Epoxidfunktionalität größer als 1 ist und deren Epoxidäquivalentgewicht unter 1000 liegt, Polyphenolen und Aminen und anschließender Neutralisation der erhaltenen Reaktionsprodukte mit einer Säure erhalten worden sind, dadurch gekennzeichnet, daß die Bindemittel hergestellt worden sind, indem zunächst ein Gemisch aus mindestens einem Polyphenol und mindestens einem Amin hergestellt worden ist, das dann mit dem ggf. modifizierten Epoxidharz umgesetzt worden ist und das so erhaltene Reaktionsprodukt anschließend mit einer Säure neutralisiert worden ist.

3. Bindemittel oder Überzugszusammensetzungen nach Anspruch 1 oder 2, dadurch gekennzeichnet, daß als Epoxidharz ein aus einem Polyphenol, vorzugsweise Bisphenol A, und einem Epihalohydrin hergestellter Polyglycidylether eingesetzt worden ist.

4. Bindemittel oder Überzugszusammensetzungen nach Anspruch 1 oder 2, dadurch gekennzeichnet, daß als Epoxidharz ein aus einem Polyphenol, vorzugsweise Bisphenol A, und einem Epihalohydrin hergestellter Polyglycidylether, der mit einem Polyether- oder Polyesterdiol kettenverlängert bzw. modifiziert worden ist, eingesetzt worden ist.

5. Bindemittel oder Überzugszusammensetzungen nach einem der Ansprüche 1 oder 2, dadurch gekennzeichnet, daß als Epoxidharz ein mit einem Monophenol modifizierter Bisphenol-A-Diglycidylether eingesetzt worden ist.

6. Bindemittel oder Überzugszusammensetzungen nach einem der Ansprüche 1 bis 5, dadurch gekennzeichnet, daß als Polyphenol-Amingemisch ein Gemisch aus mindestens einem Polyphenol, vorzugsweise Bisphenol A, und mindestens einem, vorzugsweise mindestens eine Hydroxylgruppe im Molekül enthaltendem, sekundären und/oder tertiären Amin, vorzugsweise Dialkyl- und/oder Trialkylamin, eingesetzt worden ist.

7. Verfahren zur Herstellung von kathodisch abscheidbaren wasserverdünnbaren Bindemitteln, bei dem ggf. modifizierte Epoxidharze, deren Epoxidfunktionalität größer als 1 ist und deren Epoxidäquivalentgewicht unter 1000 liegt, Polyphenole und Amine umgesetzt werden und die erhaltenen Reaktionsprodukte anschließend mit einer Säure neutralisiert werden, dadurch gekennzeichnet, daß zunächst ein Gemisch aus mindestens einem Polyphenol und mindestens einem Amin hergestellt wird, das dann mit dem ggf. modifizierten Epoxidharz umgesetzt wird und das erhaltene Reaktionsprodukt anschließend mit einer Säure neutralisiert wird.

Europäisches
Patentamt

# EUROPÄISCHER RECHERCHENBERICHT

Nummer der Anmeldung

EP 87 11 6825

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 135 811 (BASF FARBEN & FASERN)<br>* Zusammenfassung *<br>--- | | C 09 D 5/44<br>C 08 G 59/56 |
| A | US-A-4 339 369 (DARRELL D. HICKS)<br>* Zusammenfassung; Spalte 3, Zeilen 38-40 *<br>--- | | |
| A | EP-A-0 113 047 (BASF)<br>* Zusammenfassung; Seite 7, Zeilen 39-42; Seite 8, Zeilen 8-11 *<br>----- | | |

RECHERCHIERTE SACHGEBIETE (Int. Cl.4)

C 09 D
C 08 G

Der vorliegende Recherchenbericht wurde für alle Patentansprüche erstellt

| Recherchenort | Abschlußdatum der Recherche | Prüfer |
|---|---|---|
| DEN HAAG | 26-02-1988 | GIRARD Y.A. |